(19) Europäisches Patentamt / European Patent Office / Office européen des brevets

(11) **EP 2 498 898 B1**

(12) **EUROPÄISCHE PATENTSCHRIFT**

(45) Veröffentlichungstag und Bekanntmachung des Hinweises auf die Patenterteilung:
**13.07.2016 Patentblatt 2016/28**

(21) Anmeldenummer: **09752750.1**

(22) Anmeldetag: **12.11.2009**

(51) Int Cl.:
*B01D 53/94* (2006.01)   *B01J 23/44* (2006.01)
*B01J 35/00* (2006.01)   *B01J 37/02* (2006.01)
*F01N 3/10* (2006.01)   *B01J 29/74* (2006.01)
*B01J 21/12* (2006.01)

(86) Internationale Anmeldenummer:
**PCT/EP2009/008047**

(87) Internationale Veröffentlichungsnummer:
**WO 2011/057649 (19.05.2011 Gazette 2011/20)**

(54) **VERBESSERTER DIESELOXIDATIONSKATALYSATOR**

IMPROVED DIESEL OXIDATION CATALYTIC CONVERTER

CATALYSEUR D'OXYDATION POUR DIESEL AMÉLIORÉ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(43) Veröffentlichungstag der Anmeldung:
**19.09.2012 Patentblatt 2012/38**

(73) Patentinhaber: **Umicore AG & Co. KG**
**63457 Hanau-Wolfgang (DE)**

(72) Erfinder:
• **SCHUETZE, Frank-Walter**
**63808 Haibach (DE)**
• **FRANTZ, Stéphanie**
**79539 Lörrach (DE)**
• **JESKE, Gerald**
**63543 Neuberg (DE)**
• **HENGST, Christoph**
**35510 Butzbach (DE)**

(56) Entgegenhaltungen:
WO-A1-2006/021337   WO-A1-2008/101675
JP-A- 59 052 530   US-A1- 2004 087 439
US-A1- 2008 045 405

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft einen Katalysator zur Reinigung der Abgase von Dieselmotoren, insbesondere einen Oxidationskatalysator, der sich unter anderem besonders gut zur Reinigung der Abgase von Schwerlastfahrzeugen eignet, wenn ihm weitere Abgasreinigungsaggregate wie beispielsweise ein Partikelfilter und/oder ein Stickoxid-Reduktionskatalysator nachgeschaltet werden.

Das Rohabgas von Dieselmotoren enthält neben Kohlenmonoxid CO, Kohlenwasserstoffen HC und Stickoxiden $NO_x$ einen relativ hohen Sauerstoffgehalt von bis zu 15 Vol.-%. Außerdem sind Partikelemissionen enthalten, die überwiegend aus Rußrückständen und gegebenenfalls organischen Agglomeraten bestehen und aus einer partiell unvollständigen Kraftstoffverbrennung im Zylinder herrühren. Die Schadgase Kohlenmonoxid und Kohlenwasserstoffe können durch Oxidation an einem geeigneten Oxidationskatalysator leicht unschädlich gemacht werden. Zur Entfernung der Partikelemissionen sind Dieselpartikelfilter mit und ohne katalytisch aktive Beschichtung geeignete Aggregate. Die Reduktion der Stickoxide zu Stickstoff ("Entstickung" des Abgases) ist wegen des hohen Sauerstoffgehaltes schwierig. Ein bekanntes Verfahren ist die selektive katalytische Reduktion (Selective Catalytic Reduction SCR) der Stickoxide an einem geeigneten Katalysator, kurz SCR-Katalysator. Dieses Verfahren gilt gegenwärtig für die Entstickung von Dieselmotorenabgasen als bevorzugt. Die Verminderung der im Abgas enthaltenen Stickoxide erfolgt im SCR-Verfahren unter Zuhilfenahme eines aus einer externen Quelle in den Abgasstrang eindosierten Reduktionsmittels. Als Reduktionsmittel wird bevorzugt Ammoniak oder eine Ammoniak freisetzende Verbindung wie beispielsweise Harnstoff oder Ammoniumcarbamat eingesetzt. Das gegebenenfalls aus der Vorläuferverbindung in situ erzeugte Ammoniak reagiert am SCR-Katalysator mit den Stickoxiden aus dem Abgas in einer Komproportionierungsreaktion zu Stickstoff und Wasser.

Die Einhaltung der künftig in Europa, Nordamerika und Japan geltenden gesetzlichen Abgasgrenzwerte für Dieselfahrzeuge erfordert grundsätzlich eine Kombination verschiedener Abgasreinigungsaggregate. Entsprechende Abgasreinigungssysteme sind bereits vorgeschlagen worden und befinden sich derzeit für eine Vielzahl von Fahrzeugtypen (Pkw und Lkw) in der Erprobung bzw. in der Serienvorbereitung.

So beschreibt die EP-B-1 054 722 ein System zur Behandlung von $NO_x$- und Partikel-haltigen Dieselabgasen, worin ein Oxidationskatalysator einem Partikelfilter vorgeschaltet ist. Abströmseitig zum Partikelfilter sind eine Reduktionsmittelquelle und eine Dosiereinrichtung für das Reduktionsmittel, sowie ein SCR-Katalysator angeordnet. US 6,928,806 beschreibt ebenfalls ein System zur Entfernung von Stickoxiden und Partikel aus dem Abgas von Dieselmotoren. Darin ist einem Oxidationskatalysator zunächst ein SCR-Katalysator mit vorgeschalteter Reduktionsmitteldosierung nachgeschaltet. Ein Dieselpartikelfilter befindet sich abströmseitig zum SCR-Katalysator.

In solchen Kombinationssystemen werden an den vorgeschalteten Oxidationskatalysator besondere Anforderungen gestellt. Durch die am Oxidationskatalysator erfolgenden Umsetzungen soll das Abgas so aufbereitet werden, daß auch an den nachgeschalteten Aggregaten ein möglichst optimales Abgasreinigungsergebnis erzielt werden kann. Dabei ist beispielsweise zu berücksichtigen, daß der SCR-Katalysator die besten Stickoxid-Konvertierungsraten zeigt, wenn am SCR-Katalysatoreintritt ein optimales $NO/NO_2$-Verhältnis anliegt. Dieses optimale $NO/NO_2$-Verhältnis ist für alle derzeit bekannten SCR-Katalysatoren etwa 1. Besteht das im Abgas enthaltene $NO_x$ nur aus NO und $NO_2$ so liegt das optimale $NO_2/NO_x$-Verhältnis zwischen 0,3 und 0,7, bevorzugt zwischen 0,4 und 0,6 und besonders bevorzugt bei 0,5. Ob dieses Verhältnis in einem System nach US 6,928,806 erreicht wird, hängt von der Abgastemperatur und somit vom Betriebszustand des Motors und von der Aktivität des Oxidationskatalysators ab. In einem System nach EP-B-1 054 722 kommt als weitere Einflußgröße die Ausgestaltung und Rußbeladung des dem Oxidationskatalysator nachgeschalteten Dieselpartikelfilters hinzu, da bei der Oxidation von Ruß mit $NO_2$ neben CO und $CO_2$ überwiegend NO entsteht.

Eine weitere wesentliche Anforderung an einen Oxidationskatalysator in einem Kombinationssystem ergibt sich aus dem Erfordernis, daß ein nachgeschaltetes Dieselpartikelfilter gelegentlich regeneriert werden muß. In den meisten Systemen lagern sich über die Betriebsdauer Partikel im Filter ab, die nicht in gleichem Maße durch Sauerstoff oder $NO_2$ in situ, d.h. während des Betriebes, verbrannt werden können, wie sie in das Filter eingetragen werden. Dadurch steigt der Abgasgegendruck über dem Filter. Bei Erreichen eines vordefinierten Schwellwertes wird eine sogenannte aktive Partikelfilterregeneration ausgelöst, d.h. das Partikelfilter wird auf ein höheres Temperaturniveau aufgeheizt, um die gegebenenfalls katalytisch abgesenkte Rußzündtemperatur zu überschreiten und den im Filter abgeschiedenen Ruß mit Sauerstoff zu $CO_2$ zu verbrennen. Dabei gibt es verschiedene Strategien, wie das Partikelfilter zu Beginn der Regenerationsphase aufgeheizt werden kann. Zu den etabliertesten Strategien gehört das Einspritzen von Kraftstoff in den Brennraum des Zylinders während des Auslaßkolbenhubes oder als Sekundäreinspritzung in die Abgasanlage. Der eingespritzte Kraftstoff wird über dem Oxidationskatalysator katalytisch verbrannt, die dabei freiwerdende Reaktionswärme ins Abgas abgegeben und zur Aufheizung des nachgeordneten Partikelfilters auf eine Temperatur oberhalb der Rußzündtemperatur genutzt.

In einem Kombinationssystem mit Partikelfilter und SCR-Katalysator werden an den vorgelagerten Oxidationskatalysator neben den üblichen Erfordernissen wie einer hohen thermischen Langzeitstabilität, einer gute Vergiftungsresistenz gegenüber Schwefel-haltigen Verbindungen (insbesondere $SO_x$) und einer möglichst hohen CO- und HC-Konvertierung bei möglichst geringer Zündtemperatur (Light-Off-Temperatur) also zwei zusätzliche Anforderungen gestellt:

1. Die NO-Oxidationsrate muß auf den nachgeordneten SCR-Katalysator möglichst gut abgestimmt sein, d.h. das über dem Oxidationskatalysator erzeugte $NO_2/NO_x$-Verhältnis sollte möglichst um oder über 0,5 liegen.

2. Der Oxidationskatalysator muß als "Heizkatalysator" für einen nachgeordneten Partikelfilter gut geeignet sein, d.h. er muß kurzzeitig sehr hohe Mengen unverbrannter Kohlenwasserstoffe oxidativ umsetzen können, ohne daß dabei die Oxidationsreaktion zum Erliegen kommt. Dabei muß der Umsatz der unverbrannten Kohlenwasserstoffe möglichst vollständig sein, da der Durchbruch unverbrannter Kohlenwasserstoffe durch den Oxidationskatalysator spätestens am SCR-Katalysator, der weiter abströmseitig angeordnet ist, zu Vergiftungen desselben führen kann. Ein Durchbruch unverbrannter Kohlenwasserstoffe am Ende der Abgasanlage kann darüber hinaus zur Nichteinhaltung der gesetzlichen Grenzwerte führen. Dabei muß die Kraftstoffverbrennung über dem Oxidationskatalysator schon bei möglichst niedrigen Abgastemperaturen (180 bis 250°C) "zündern". In Summe soll der Oxidationskatalysator also sehr hohe HC-Umsatzraten schon bei möglichst geringen Abgastemperaturen zeigen, wobei der HC-Umsatz ab Erreichen der "Zündtemperatur" (Light-Off-Temperatur) möglichst sprunghaft auf Maximalwerte ansteigen soll. Außerdem muß der Katalysator so alterungsstabil sein, daß er durch die während der exothermen Kohlenwasserstoffverbrennung freigesetzte Reaktionswärme in seiner Aktivität nicht zu stark beeinträchtigt wird. Diese Leistungsanforderungen werden im folgenden zusammenfassend als "heat-up- Performance" bezeichnet.

Für den Einsatz des Katalysators in Kombinationssystemen zur Reinigung der Abgase von Dieselfahrzeugen ist fernerhin zu berücksichtigen, daß beispielsweise schwere Nutzfahrzeuge wie Stadtbusse, Abfallentsorgungsflotten, Bau- oder Landmaschinen oft in einem grundsätzlich anderen Fahrbetrieb genutzt werden als Diesel-Pkw. Daraus resultiert ein anderes Abgasprofil mit erheblich niedrigeren Abgastemperaturen und anderen Abgaszusammensetzungen. So ist im Vergleich zu Diesel-Pkw-Abgasen der Stickoxid-Gehalt im Rohabgas deutlich geringer, der Anteil an Partikelemissionen aber unter Umständen merklich erhöht. Die Leistungsfähigkeit des vorgelagerten Oxidationskatalysators muß an ein solches Abgasprofil angepaßt sein.

Herkömmliche Oxidationskatalysatoren werden den beschriebenen Anforderungen insbesondere beim Einsatz in Kombinationssystemen zur Reinigung der Abgase von schweren Nutzfahrzeugen nicht gerecht.

So beschreibt beispielsweise EP-B-0 800 856 der Anmelderin einen Dieseloxidationskatalysator bestehend aus einem oder mehreren Zeolithen, die in der $Na^+$- oder $H^+$-Form vorliegen, sowie zusätzlich einem oder mehreren Metalloxiden ausgewählt aus Aluminiumsilikat (Gewichtsverhältnis Siliziumdioxid/Aluminiumoxid = 0,005 bis 1), Aluminiumoxid und Titanoxid und mindestens einem Platingruppenmetall. Der Katalysator, in dem die Platinguppenmetalle nur auf den zusätzlichen Metalloxiden abgeschieden sind, ist in der Lage, insbesondere die langkettigen, schwer oxidierbaren Paraffine im Abgas bei Temperaturen unterhalb von 200°C zu oxidieren. Die Reaktion ist bei tiefen Temperaturen jedoch zu langsam und nicht hinreichend vollständig, so daß es bei der Nutzung des Katalysators als Heizkatalysator zur Aktivregeneration eines nachgeschalteten Filters zu Durchbrüchen von unverbrannten Kohlenwasserstoffen kommt. Für den Einsatz in Kombinationssystemen mit einem SCR-Katalysator ist dieser Katalysator auch aufgrund seiner unzureichenden NO-Oxidationsaktivität nicht geeignet.

EP-B-1 370 357 der Anmelderin beschreibt einen Katalysator aus einer katalytisch aktiven Beschichtung auf einem inerten Wabenkörper aus Keramik oder Metall. Die Beschichtung umfaßt mindestens eines der Platingruppenmetalle Platin, Palladium, Rhodium und Iridium auf einem feinteiligen oxidischen Trägermaterial geringer Porosität auf der Basis von Siliziumdioxid. Das Trägermaterial beinhaltet Aggregate von im wesentlichen kugelförmigen Primärteilchen mit einem mittleren Partikeldurchmesser zwischen 7 und 60 nm. Der Katalysator zeichnet sich durch eine verbesserte thermische Alterungsbeständigkeit und eine verminderte Neigung zur Vergiftung durch Schwefel-haltige Abgasbestandteile (insbesondere $SO_x$) aus. Jedoch zeigt auch dieser Katalysator für den Einsatz in Kombinationsystemen mit einem SCR-Katalysator weder hinreichende NO-Oxidationsaktivität noch ausreichende "heat-up-Performance".

Wie die vorstehend beschriebenen enthalten die meisten Dieseloxidationskatalysatoren nur eine homogen zusammengesetzte Funktionsbeschichtung. Katalysatoren mit zwei unterschiedlich zusammengesetzten Funktionsbeschichtungen, wie sie beispielsweise von Dreiwegekatalysatoren zur Reinigung der Abgase von Ottomotoren bekannt sind, sind bei Dieseloxidationskatalysatoren eher selten. US 2008/00450405 beschreibt einen solchen Dieseloxidationskatalysator. Darin wird auf einem Trägersubstrat eine Unterschicht ("bottom washcoat layer") oder eine abströmseitige Zone ("downstream washcoat layer") aufgebracht, die ein hochoberflächiges, im wesentlichen Siliziumdioxid-freies Trägermaterial mit Platin und/oder Palladium enthält. Diese Unterschicht bzw. anströmseitige Zone enthält keine HC-Speicherkomponente (z.B. Zeolith). Auf die Unterschicht bzw. vor die abströmseitige Zone wird eine Oberschicht ("top washcoat layer") bzw. eine anströmseitige Zone ("upstream washcoat layer") aufgebracht, die ebenfalls ein hochoberflächiges Trägermaterial und Platin und/oder Palladium und ergänzend dazu ein HC-Speichermaterial enthält. Kennzeichnend für den Katalysator ist, daß das Pt:Pd-Gewichtsverhältnis in der Oberschicht (bzw. in der anströmseitigen Zone) größer ist als das Pt:Pd-Gewichtsverhältnis in der Unterschicht (bzw. in der abströmseitigen Zone). Die Oberschicht (anströmseitige Zone) des Katalysators ist hinsichtlich Schwefeltoleranz und Paraffinoxidation optimiert, die Unterschicht (abströmseitige Zone) hinsichtlich hydrothermaler Stabilität. Allerdings zeigt dieser Katalysator mit hinsichtlich Schwefeltoleranz optimierter und folglich acider Deckschicht keine hinreichende NO-Oxidationsaktivität.

Aufgabe der vorliegenden Erfindung ist es, einen Oxidationskatalysator bereit zu stellen, der sich für den Einsatz in einem Kombinationssystem mit Partikelfilter und SCR-Katalysator mit Reduktionsmitteleinspritzung zur Reinigung der Abgase von Dieselmotoren, insbesondere zur Reinigung der Abgase schwerer Nutzfahrzeuge eignet und der dabei die vorstehend beschriebenen Anforderungen besser erfüllt als die im Stand der Technik bekannten Oxidationskatalysatoren.

Diese Aufgabe wird gelöst durch einen Katalysator zur Reinigung der Abgase von Dieselmotoren bestehend aus einem Tragkörper und zwei in ihrer Zusammensetzung unterschiedlichen katalytisch aktiven Beschichtungen, von denen nur eine mit dem abströmenden Abgas in unmittelbarem Kontakt steht, wobei beide Beschichtungen auf einem keramischen oder metallischen Durchflußwabenkörper als Tragkörper (3) aufgebracht sind und die Platingruppenmetalle Platin (Pt) und Palladium (Pd) als katalytisch aktive Komponenten enthalten und wobei die mit dem abströmenden Abgas in unmittelbarem Kontakt stehende Beschichtung (1) mehr Pt als Pd enthält, dadurch gekennzeichnet, dass die mit dem abströmenden Abgas in unmittelbarem Kontakt stehende Beschichtung (1) insgesamt mehr Platingruppenmetall enthält als die nicht mit dem abströmenden Abgas in unmittelbarem Kontakt stehende Beschichtung (2) und wobei die katalytisch aktive Beschichtung (2), die nicht mit dem abströmenden Abgas in unmittelbarem Kontakt steht, direkt auf den Durchflußwabenkörper (3) aufgebracht ist, wobei sie sich über die gesamte Länge des Bauteils erstreckt und von der mit dem abströmenden Abgas in unmittelbarem Kontakt stehenden Beschichtung (1) über die gesamte Länge des Bauteils abgasseitig überdeckt wird.

Den im erfindungsgemäßen Katalysator vorliegenden Beschichtungen kommen unterschiedliche Funktionen zu. So zeichnet sich die mit dem abströmenden Abgas in unmittelbarem Kontakt stehende Beschichtung durch eine exzellente Oxidationsaktivität gegenüber den Komponenten HC und CO und vor allem gegenüber NO aus. Durch die Kombination eines erhöhten Gesamtedelmetallgehalts der Schicht mit einem hohen Pt:Pd-Gewichtsverhältnis ist die Oxidationskraft der mit dem abströmenden Abgas in unmittelbarem Kontakt stehenden Beschichtung deutlich größer als die Oxidationskraft der insgesamt edelmetallärmeren, nicht mit dem abströmenen Abgas in unmittelbarem Kontakt stehenden Beschichtung. Dies bewirkt, daß der erfindungsgemäße Katalysator während der von einer aktiven Regeneration eines nachgeschalteten Partikelfilters unabhängigen "Regelbetriebsphasen" neben einer quasi vollständigen CO- und HC-Konvertierung exzellente $NO_2$-Bildungsraten zeigt. Mit Blick auf die in einem Kombinationssystem nachgeschalteten Abgasreinigungskomponenten Partikelfilter und SCR-Katalysator hat dies zwei Vorteile: Durch den erhöhten $NO_2$-Anteil im Abgas erhöht sich der Anteil der auf dem Filter abgeschiedenen Partikel, die in situ, d.h. während des Regelbetriebes, ohne zusätzliche Heizmaßnahmen oxidiert und somit abgebrannt werden können. Infolgedessen verlangsamt sich die Bildung eines "filterkuchens" aus Rußpartikeln im Filter und somit der Anstieg des Abgasgegendruckes über dem Filter. Das Filter muß seltener regeneriert werden. Desweiteren wird durch die exzellenten $NO_2$-Bildungsraten über dem erfindungsgemäßen Katalysator während des Regelbetriebes sichergestellt, daß das $NO_2/NO_x$-Verhältnis am Eintritt des nachgeschalteten SCR-Katalysators im Bereich 0,3 bis 0,7 liegt. Dadurch sind hervorragende $NO_x$-Konvertierungsraten auch bei tiefen Temperaturen (180 bis 250°C) über dem SCR-Katalysator möglich.

Bevorzugt enthält die mit dem abströmenden Abgas in unmittelbarem Kontakt stehende Beschichtung 1,2 bis 2 mal soviel Platingruppenmetall wie die nicht mit dem abströmendem Abgas in unmittelbarem Kontakt stehende Beschichtung. In den bevozugten Ausführungsformen des erfindungsgemäßen Katalysators liegen 55 bis 80 Gew.-% des insgesamt im Katalysator enthaltenen Edelmetalls in der mit dem abströmenden Abgas in unmittelbaren Kontakt stehenden Beschichtung vor, besonders bevorzugt 55 bis 70 Gew.-% und idealerweise 57 bis 60 Gew.-%. Darüber hinaus weist sie bevorzugt ein Pt:Pd-Gewichtsverhältnis auf, das größer oder gleich 6:1 ist. Besonders bevorzugt liegt das Pt:Pd-Gewichtsverhältnis zwischen 6 : 1 und 20 : 1, ganz besonders bevorzugt zwischen 6 : 1 und 10 : 1 und idealerweise bei 7 : 1. Die Oxidationskraft der mit dem abströmenden Abgas in unmittelbarem Kontakt stehenden Beschichtung ist dann sehr gut auf die geforderten $NO_2$-Bildungsraten abgestimmt, ohne dabei insgesamt zu hohe Mengen Edelmetall, insbesondere sehr hohe Mengen des teureren Edelmetalls Platin aufwenden zu müssen.

Die zweite, nicht mit dem abströmenden Abgas in unmittelbarem Kontakt stehende Beschichtung enthält insgesamt weniger Edelmetall und zeichnet sich durch ein deutlich geringeres Pt:Pd-Gewichtsverhältnis, d.h. durch einen im Verhältnis deutlich höheren Palladiumanteil, aus. Bevorzugt weist diese nicht mit dem abströmenden Abgas in unmittelbarem Kontakt stehende Beschichtung ein Pt:Pd-Gewichtsverhältnis von 1:4 bis 2:1, besonders bevorzugt von 1 : 2 bis 1 : 1 auf. Sie übernimmt die Funktion des sogenannten "heat-ups" während der Aktivregeneration eines nachgeschalteten Partikelfilters und zeichnet sich durch eine sehr gute "heat-up-Performance" (wie vorstehend beschrieben) aus.

Zur Unterstützung der HC-Konvertierung im allgemeinen und der "heat-up-Performance" im besonderen enthalten besonders bevorzugte Ausführungsformen des erfindungsgemäßen Katalysators in der nicht mit dem abströmenden Abgas in unmittelbarem Kontakt stehenden Beschichtung desweiteren eine oder mehrere Zeolithverbindungen, die ausgewählt sind aus der Gruppe der beta-Zeolithe, der X-Zeolithe, der Y-Zeolithe, der Mordenite und der ZSM-5-Zeolithe. Diese Zeolithe zeigen gegenüber den im Dieselabgas vorkommenden Kohlenwasserstoffen eine speichernde Wirkung. Die Beimischung des HC-speichernden Zeolithen in der nicht mit dem abströmenden Abgas in unmittelbarem Kontakt stehenden Beschichtung hat den Vorteil, daß Kohlenwasserstoffe, die beispielsweise während der Kaltstartphase oder aufgrund ihrer Menge während einer "heat-up"-Phase zur aktiven Filterregeneration in den Zeolithen eingelagert wurden und zu einem späteren Zeitpunkt unter geeigneten Betriebsbedingungen aus dem HC-Speicher wieder freigesetzt werden, per Zwangsströmung die edelmetallreiche Beschichtung, die mit dem abströmenden Abgas in unmittelbarem Kontakt steht, passieren müssen. Dadurch wird gewährleistet, daß diese Kohlenwasserstoffe so vollständig wie möglich zu $CO_2$ und Wasser umgesetzt werden können, denn die mit dem abströmenden Abgas in Kontakt stehende Beschichtung ist, wie vorstehend erläutert, die Beschichtung mit der größeren Oxidationskraft. Dadurch werden an entsprechenden Ausführungsformen des erfindungsgemäßen Katalysators über den gesamten Fahrzyklus bessere HC-Konvertierungsleistungen erzielt als an Katalysatoren nach dem Stand der Technik, in denen keine HC-speichernde Zeolithverbindungen vorliegen oder in denen diese in einer mit dem abströmenden Abgas in Kontakt stehenden Beschichtung angeordnet sind.

Durch die Kombination der beiden Schichten gelingt es nach Erkenntnissen der Erfinder erstmals, einen Oxidationskatalysator bereit zu stellen, der alle in einem Kombinationssystem gestellten Anforderungen an den Oxidationskatalysator bei wirtschaftlich vertretbarem Gesamtedelmetallgehalt erfüllen kann. Dabei können sich die beiden in unterschiedlichen Betriebszuständen des Katalysators zur Wirkung kommenden technische Effekte der NO-Oxidation einerseits und der "heat-up-Performance" andererseits nach Erkenntnissen der Erfinder nur dann voll entfalten, wenn die räumliche Anordnung der Beschichtungen eingehalten wird, d.h. wenn es die über die höhere Oxidationskaft verfügende edelmetall- und platinreichere Beschichtung ist, die mit dem abströmenden Abgas in unmittelbarem Kontakt steht.

In den bevorzugten Ausführungsformen des erfindungsgemäßen Katalysators sind Platin und/oder Palladium in beiden Schichten auf einem oder mehreren hochschmelzenden, hochoberflächigen Trägeroxiden aufgebracht, welche ausgewählt sind aus der Gruppe der Aluminiumoxide, der Zirkonoxid- und/oder Titanoxid-dotierten Aluminiumoxide oder der Aluminium-Silizium-Mischoxide. Zur Herstellung einer geeigneten Beschichtungssuspension werden die ausgewählten Trägeroxide in Wasser suspendiert. Platin und Palladium werden unter Rühren in Form von geeigneten, wasserlöslichen Vorläuferverbindungen wie beispielsweise Palladiumnitrat oder Hexahydroxoplatinsäure zur Suspension hinzugegeben und gegebenenfalls durch Stellung des pH-Wertes und/oder durch Zugabe eines Hilfsreagenses auf dem Trägermaterial fixiert. Entsprechende Vorläuferverbindungen und Hilfsreagentien sind dem Fachmann geläufig. Die so erhaltenen Suspensionen werden dann vermahlen und nach einem der herkömmlichen Beschichtungsverfahren auf einen inerten Tragkörper aufgebracht. Nach jedem Beschichtungsschritt erfolgt die Trocknung des beschichteten Teils im heißen Luftstrom und gegebenenfalls eine Kalzinierung. Als Tragkörper für die katalytisch aktiven Beschichtungen werden zur Herstellung des erfindungsgemäßen Katalysators keramische oder metallische Durchflußwabenkörper eingesetzt.

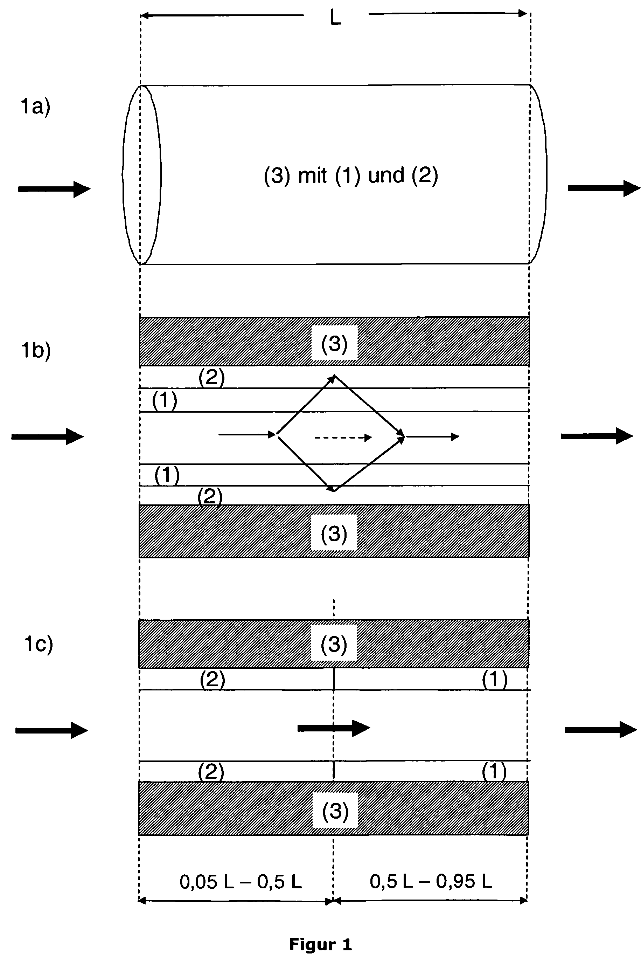

Figur 1 zeigt die erfindungsgemäße Ausführungsform.

Es wird, wie in Figur 1 b) dargestellt, die katalytisch aktive Beschichtung (2), die nicht mit dem abströmenden Abgas in unmittelbarem Kontakt steht, direkt auf den Durchflußwabenkörper aufgebracht, wobei sie sich über die gesamte Länge des Bauteils erstreckt und von der mit dem abströmenden Abgas in unmittelbarem Kontakt stehenden Beschichtung (1) über die gesamte Länge des Bauteils abgasseitig überdeckt wird. Dadurch entsteht ein sogenannter 2-Schicht-Katalysator oder "Layer-Katalysator", worin die palladiumreichere und ggf. zeolithhaltige "heat-up"-Funktionsbeschichtung als untere Schicht vorliegt und von der platinreicheren Beschichtung mit der höheren Oxidationskraft als oberer Schicht vollständig überdeckt wird.

Es ist besonders vorteilhaft, wenn die direkt auf dem Durchflußwabenkörper aufgebrachte (untere) Schicht desweiteren eine oder mehrere Zeolithverbindungen enthält, die ausgewählt sind aus der Gruppe der beta-Zeolithe, der X-Zeolithe, der Y-Zeolithe, der Mordenite und ZSM-5-Zeolithe und die gegenüber den im Dieselabgas vorkommenden Kohlenwasserstoffen eine speichernde Wirkung zeigen. Es wurde bereits vorstehend erläutert, daß diese Zeolith-Beimischung eine Verbesserung der HC-Konvertierung im allgemeinen und der "heat-up-Performance" im besonderen bewirkt.

Der erfindungsgemäße Katalysator eignet sich für den Einsatz in Vorrichtungen zur Reinigung der Abgase von Dieselmotoren. Besonders bevorzugt enthält eine solche Vorrichtung desweiteren einen Dieselpartikelfilter und/oder einen Katalysator zur selektiven katalytischen Reduktion von Stickoxiden, wobei der erfindungsgemäße Katalysator selbst dem Dieselpartikelfilter und/oder dem Katalysator zur selektiven katalytischen Reduktion von Stickoxiden vorgeschaltet ist.

Die Erfindung wird nachstehend anhand einiger Figuren und Beispiele weitergehend erläutert. Es zeigen:

**Figur 1:** verschiedene Ausführungsformen des erfindungsgemäßen Katalysators; die Pfeile zeigen die Strömungsrichtung des zu reinigenden Abgases an.

1a) Übersichtzeichnung: Durchflußwabenköper (3) der Länge L enthaltend katalytisch aktive Beschichtungen (1) und (2);

1b) Ausführung als "Layer-Katalysator", dargestellt als Ausschnitt aus dem Durchflußwabenkörper (3), der genau einen Strömungskanal zeigt; die mit dem abströmenden Abgas nicht in unmittelbarem Kontakt stehende katalytisch aktive Beschichtung (2) ist direkt auf den Durchflußwabenkörper (3) aufgebracht und wird von der mit dem abströmenden Abgas in unmittelbaren Kontakt stehenden Beschichtung (1) über die gesamte Länge des Durchflußwabenkörpers (3) überdeckt;

1c) nicht erfindungsgemäß: Ausführung als "Zonenkatalysator", dargestellt als Ausschnitt aus dem Durchflußwabenkörper (3), der genau einen Strömungskanal zeigt; die mit dem abströmenden Abgas nicht in unmittelbarem Kontakt stehende katalytisch aktive Beschichtung (2) ist als anströmseitige Zone ausgeführt und bedeckt 5 bis 50 % der Länge des Durchflußwabenkörpers; die mit dem abströmenden Abgas in unmittelbaren Kontakt stehenden Beschichtung (1) bildet eine abströmseitige Zone und bedeckt die restliche Länge des Wabenkörpers.

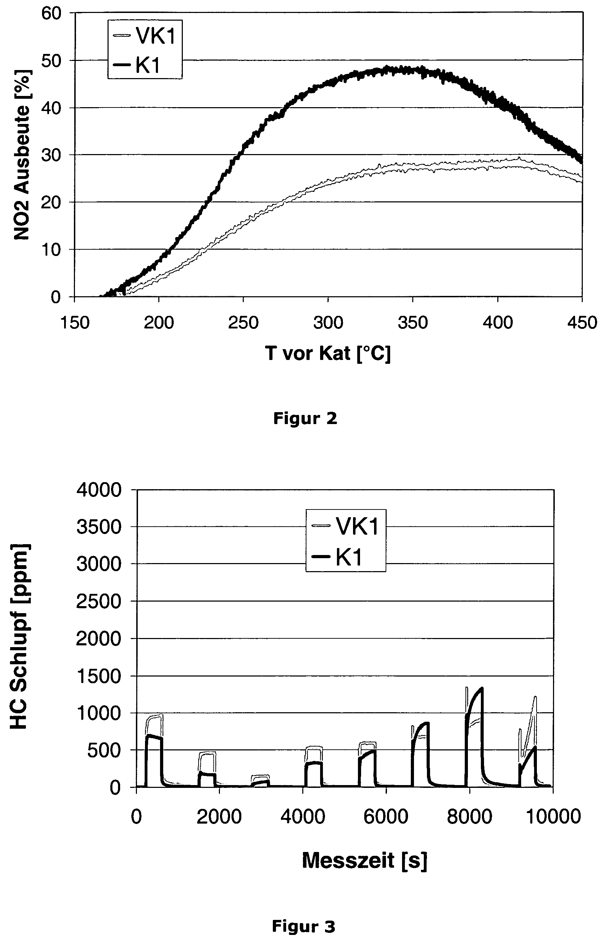

**Figur 2:** $NO_2$-Ausbeute des erfindungsgemäßen Katalysators K1 als Funktion der Temperatur vor Katalysator im Vergleich zum einschichtigen Katalysator nach dem Stand der Technik VK1.

**Figur 3:** HC-Durchbrüche ("HC-Schlupf") durch einen erfindungsgemäßen Katalysator K1 im Vergleich zu einem Katalysator nach dem Stand der Technik VK1 in Betriebspunkten mit deutlich erhöhter HC-Belastung des Katalysators.

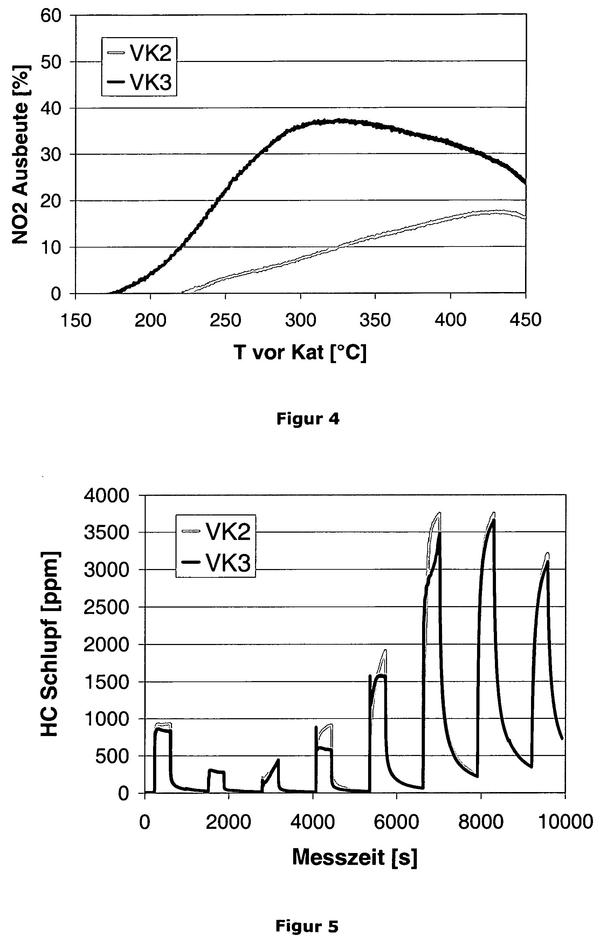

**Figur 4:** $NO_2$-Ausbeute über der mit dem abströmenden Abgas in unmittelbarem Kontakt stehenden Beschichtung VK3 im Vergleich zur $NO_2$-Ausbeute über der nicht mit dem abströmenden Abgas in direktem Kontakt stehenden Beschichtung VK2 des erfindungsgemäßen Katalysators K1 als Funktion der Temperatur vor Katalysator.

**Figur 5:** HC-Durchbrüche ("HC-Schlupf") durch die mit dem abströmenden Abgas in unmittelbarem Kontakt stehenden Beschichtung VK3 im Vergleich zu HC-Durchbrüchen durch die nicht mit dem abströmenden Abgas in direktem Kontakt stehenden Beschichtung VK2 des erfindungsgemäßen Katalysators K1 in Betriebspunkten mit deutlich erhöhter HC-Belastung des Katalysators.

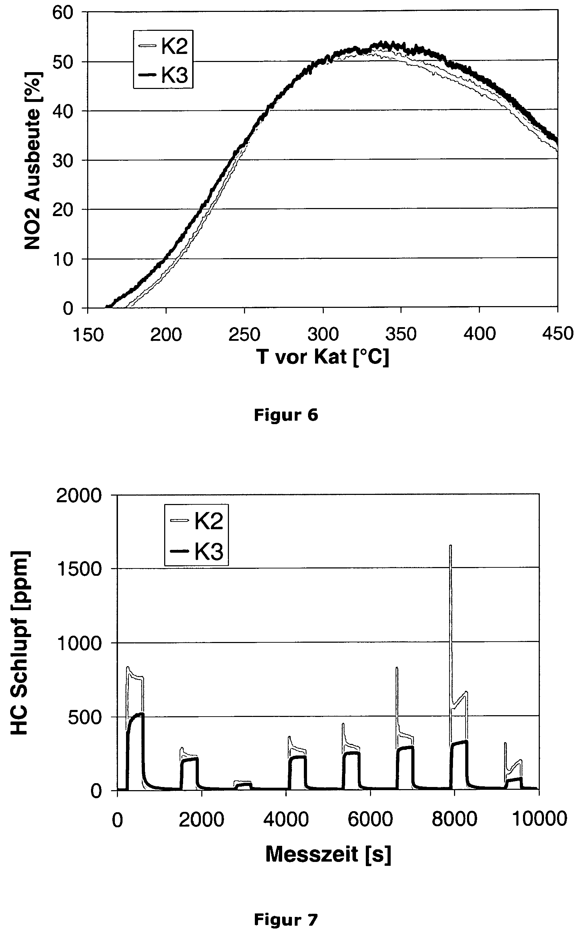

**Figur 6** $NO_2$-Ausbeute des erfindungsgemäßen Katalysators K2, der keine Zeolithverbindung in der nicht mit dem abströmenden Abgas in unmittelbarem Kontakt stehenden Beschichtung enthält, im Vergleich zur $NO_2$-Ausbeute des erfindungsgemäßen Katalysator K3 mit Zeolith-Zusatz in der nicht mit dem abströmenden Abgas in unmittelbarem Kontakt stehenden Beschichtung, als Funktion der Temperatur vor Katalysator.

**Figur 7** HC-Durchbrüche ("HC-Schlupf") durch den erfindungsgemäßen Katalysators K2, der keine Zeolithverbindung in der nicht mit dem abströmenden Abgas in unmittelbarem Kontakt stehenden Beschichtung enthält, im Vergleich zum HC-Schlupf durch den erfindungsgemäßen Katalysator K3 mit Zeolith-Zusatz in der nicht mit dem abströmenden Abgas in unmittelbarem Kontakt stehenden Beschichtung.

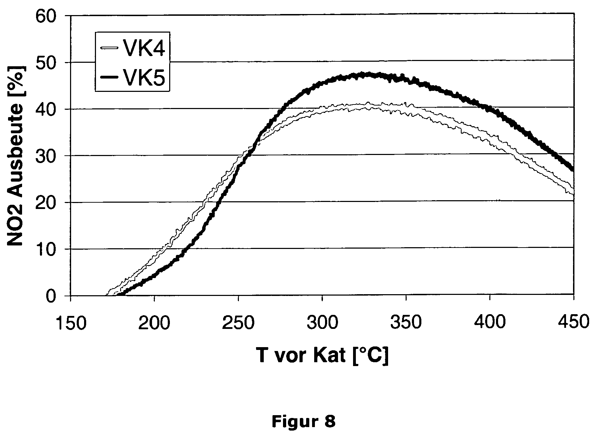

**Figur 8:** $NO_2$-Ausbeute eines Vergleichskatalysators VK5 mit erfindungsgemäßer räumlicher Anordung der Funktionsschichten und Zeolithverbindung in der nicht mit dem abströmenden Abgas in unmittelbarem Kontakt stehenden Beschichtung im Vergleich zur $NO_2$-Ausbeute des zusammensetzungsgleichen Vergleichskatalysators VK4 mit umgekehrter räumlicher Anordnung der Schichten, als Funktion der Temperatur vor Katalysator.

Es wurden erfindungsgemäße Katalysatoren und einige Vergleichskatalysatoren hergestellt. Hierzu wurden keramische Wabenkörper mit einem Durchmesser von 266,7 mm und einer Länge von 152,4 mm, die 62 Zellen pro $cm^2$ mit einer Zellwandstärke von 0,1651 mm aufwiesen, mit Beschichtungssuspensionen der nachstehend genannten Zusammensetzung nach einem herkömmlichen Tauchverfahren beschichtet. Nach Aufbringen der Beschichtungssuspension wurden die Wabenkörper im Heizgebläse getrocknet und bei 500°C thermisch behandelt.

Die katalytische Aktivität der fertigen Katalysatoren wurde an einem Motorprüfstand, der mit einem MAN D2066 Common-Rail-Dieselmotor mit einem Hubraum von 10,5 L (Euro-IV) ausgestattet war, untersucht. Der Prüfstand verfügte neben Temperaturmeßstellen vor Katalysator über Möglichkeiten zur detaillierten Abgasanalyse vor und nach Katalysator.

Vor der Testung wurden die Katalysatoren zunächst einer künstlichen Alterung unterzogen. Hierzu wurden sie über 16 Stunden bei einer Temperatur von 750°C in einem Ofen in hydrothermaler Atmosphäre (10 Vol.-% $H_2O$ und 10

Vol.-% $O_2$ in Luft) gelagert.

Zur Untersuchung der NO-Oxidationsleistung der Katalysatoren wurde ein sogenannter "Light-Off-Test" gefahren. Hierbei wird der Katalysator im zu reinigenden Abgas unter definierten Bedingungen aufgeheizt:

Drehzahl: 1100 min$^{-1}$
Drehmoment-Profil: $0 \rightarrow 2130$ Nm in t = 1800 s 2130 Nm für t = 30 s 2130 $\rightarrow$ 0 Nm in t = 1800 s
$\rightarrow$ Temperatur vor Katalysator: 115 - 455 °C

Während dessen wurden die NO- und $NO_2$-Konzentrationen im Abgas vor und nach Katalystor mit Hilfe von Chemolumineszenzdetektoren (CLD; AVL) mit einer Frequenz von 1 Hz erfasst. Aus diesen Daten konnte dann die $NO_2$-Ausbeute mit

$$Y_{NO_2} = \frac{c^{nach\ Kat}(NO_2) - c^{vor\ Kat}(NO_2)}{c^{vor\ Kat}(NO_x)}$$

als Funktion der Temperatur ermittelt werden, wobei

$$c^{vor\ Kat}(NO_x) = c^{vor\ Kat}(NO) + c^{vor\ Kat}(NO_2)$$

ist.

Zur Untersuchung der "heat-up-Performance" wurden nacheinander die folgenden Betriebspunkte eingestellt:

| Betriebspunkt | Drehzahl [min$^{-1}$] | Drehmoment [Nm] | Raumgeschwindigkeit [h$^{-1}$] | HC-Menge dosiert*) [g/min] | T vor Kat [°C] |
|---|---|---|---|---|---|
| 1 | 2050 | 730 | 115.000 | 195 | 340 |
| 2 | 1600 | 700 | 70.000 | 110 | 340 |
| 3 | 1250 | 500 | 40.000 | 70 | 295 |
| 4 | 1835 | 435 | 70.000 | 120 | 300 |
| 5 | 1900 | 400 | 70.000 | 125 | 290 |
| 6 | 1950 | 310 | 70.000 | 135 | 270 |
| 7 | 1980 | 255 | 70.000 | 140 | 255 |
| 8 | 1360 | 360 | 40.000 | 80 | 250 |
| *) HC-Dosierung mittels preßluftgesteuertem Ventil und Massendurchflußmesser zur Ermittlung der Dosiermenge; Dosierdauer: 6 min | | | | | |

Mit Hilfe von Flammenionisationsdetektoren (FID, AVL) wurde der Anteil der durch den Oxidationskatalysator durchbrechenden Restkohlenwasserstoffe in Vppm mit einer Meßfrequenz von 1 Hz erfasst.

**Vergleichsbeispiel 1**:

Es wurde ein herkömmlicher Dieseloxidationskatalysator mit nur einer aktiven Schicht hergestellt. Zur Herstellung einer geeigneten Beschichtungssuspension wurde ein bis zu 20 Gew.-% $SiO_2$ enthaltendes Silizium-Aluminium-Mischoxid porenfüllend mit Platinnitratlösung und Palladiumnitratlösung imprägniert und getrocknet. Nach thermischer Fixierung des Edelmetalls wurde das so erhaltene Pulver in Wasser suspendiert und wie vorstehend beschrieben nach Vermahlen auf einen keramischen Wabenkörper aufgebracht. Der fertige Katalysator VK1 enthielt nach Trocknung und Kalzination, bezogen auf das Volumen des Wabenkörpers:

100 g/L      Silizium-Aluminium-Mischoxid mit bis zu 20 Gew.-% $SiO_2$
0,681 g/L      Platin ex Nitratlösung
0,272 g/L      Palladium ex Nitratlösung

**Beispiel 1:**

Es wurde ein erfindungsgemäßer Katalysator hergestellt, dessen Gesamtedelmetallgehalt und Platin-Palladium-Verhältnis dem des herkömmlichen Dieseloxidationskatalysators aus Vergleichsbeispiel 1 entsprachen.

Hierzu wurde der keramische Wabenkörper zunächst mit einer ersten Beschichtung versehen, die, bezogen auf das Volumen des fertigen Katalysators, die folgende Zusammensetzung aufwies:

| | |
|---|---|
| 40 g/L | Silizium-Aluminium-Mischoxid mit bis zu 20 Gew.-% $SiO_2$ |
| 0,204 g/L | Platin ex Nitratlösung |
| 0,204 g/L | Palladium ex Nitratlösung |
| 15 g/L | kommerziell erhältlicher beta-Zeolith |

Diese Beschichtung stellte nach Fertigstellung des Katalysators die nicht mit dem abströmenden Abgas in unmittelbarem Kontakt stehende Beschichtung dar.

Nach Trocknung und Kalzination der ersten Schicht wurde darauf eine zweite Schicht aufgebracht, die, bezogen auf das Volumen des fertigen Katalysators, die folgende Zusammensetzung aufwies:

| | |
|---|---|
| 40 g/L | Silizium-Aluminium-Mischoxid mit bis zu 20 Gew.-% $SiO_2$ |
| 0,477 g/L | Platin ex Nitratlösung |
| 0,068 g/L | Palladium ex Nitratlösung |

Diese Beschichtung stellte nach Fertigstellung des Katalysators die mit dem abströmenden Abgas in unmittelbarem Kontakt stehende Beschichtung dar.

Die Zusammensetzungen ergeben sich für den fertigen Katalysator K1 nach Trocknung und Kalzination.

Figur 2 zeigt die $NO_2$-Ausbeute des erfindungsgemäßen Katalysators K1 als Funktion der Temperatur vor Katalysator im Vergleich zum einschichtigen Katalysator nach dem Stand der Technik VK1. Die mit dem erfindungsge-mäßen Katalysator erzielte $NO_2$-Ausbeut ist in einem vergleichbaren Temperaturbereich um bis zu 20 % höher.

Figur 3 zeigt den nach Katalysator zu beobachtenden HC-Schlupf in den o.g. Betriebspunkten des "heat-up-Tests" für den erfindungsgemäßen Katalysator K1 und den Katalysator nach dem Stand der Technik VK1. Der erfindungsgemäße Katalysator zeigt in sechs von acht getesteten Betriebspunkten deutlich geringere HC-Durchbrüche als der Katalysator nach dem Stand der Technik VK1.

Anhand der beiden Vergleichskatalysatoren VK2 und VK3 wurden die Funktionalitäten der beiden im erfindungsgemäßen Katalysator enthaltenen Beschichtungen unabhängig voneinander untersucht.

**Vergleichskatalysator 2:**

Es wurde ein keramischer Wabenkörper mit einer Beschichtung versehen, die, bezogen auf das Volumen des fertigen Katalysators VK2, die folgende Zusammensetzung aufwies:

| | |
|---|---|
| 40 g/L | Silizium-Aluminium-Mischoxid mit bis zu 20 Gew.-% $SiO_2$ |
| 0,204 g/L | Platin ex Nitratlösung |
| 0,204 g/L | Palladium ex Nitratlösung |
| 15 g/L | kommerziell erhältlicher beta-Zeolith |

Diese Beschichtung entsprach der unteren Beschichtung des Katalysators K1 aus Beispiels 1, welche nicht mit dem abströmenden Abgas in unmittelbarem Kontakt steht.

**Vergleichskatalysator 3:**

Ein keramischer Wabenkörper wurde mit einer Beschichtung versehen, die bezogen auf das Volumen des fertigen Katalysators VK3, die folgende Zusammensetzung aufwies:

| | |
|---|---|
| 40 g/L | Silizium-Aluminium-Mischoxid mit bis zu 20 Gew.-% $SiO_2$ |
| 0,477 g/L | Platin ex Nitratlösung |
| 0,068 g/L | Palladium ex Nitratlösung |

Diese Beschichtung entsprach der oberen Beschichtung des Katalysators K1 aus Beispiels 1, welche mit dem abströmenden Abgas in unmittelbarem Kontakt steht.

Figur 4 zeigt die $NO_2$-Ausbeute über den Katalysatoren VK2 und VK3. Es ist offensichtlich, daß VK3, welcher der mit dem abströmenden Abgas in unmittelbarem Kontakt stehenden Beschichtung im erfindungsgemäßen Katalysator KI entspricht, eine signifikant höhere $NO_2$-Ausbeute liefert als VK2, welcher der mit dem abströmenden Abgas nicht in unmittelbarem Kontakt stehenden Beschichtung entspricht.

Figur 5 zeigt den HC-Schlupf durch VK2 und VK3, der für beide Schichten vergleichbar ist. Interessanter ist der Vergleich mit dem HC-Schlupf des erfindungsgemäßen Katalysators K1 in Figur 2: Kombiniert man die beiden Beschichtungen, die, wie Figur 3 zeigt, jede für sich gesehen keine besonders gute "heat-up-Performance" zeigen, zum erfindungsgemäßen Katalysator, so vermindert sich bei erfindungsgemäßer räumlicher Anordnung der beiden Schichten der HC-Schlupf über dem entstehenden Katalysator dramatisch. In den Betriebspunkten 6, 7 und 8, in denen sehr hohe HC-Belastungen anliegen, reduziert sich der HC-Schlupf von 3000 - 3500 Vppm, der für die Einzelschichten charakteristisch ist, auf weniger als 1000 Vppm in den Betriebspunkten 6 und 8 und auf weniger als 1500 Vppm in Betriebspunkt 7. Dieser Effekt ist aufgrund der Einzelleistung der jeweiligen Funktionsbeschichtungen als solcher nicht zu erwarten. Ursache hierfür ist ein synergistisches Zusammenwirken zwischen der Palladium-reichen, nicht mit dem abströmenden Abgas in unmittelbarem Kontakt stehenden Beschichtung und der zweiten, mit dem abströmenden Abgas in unmittelbarem Kontakt stehenden Beschichtung. Per Zwangströmung wird das abströmende Abgas durch die Beschichtung mit der höheren Oxidationskraft geleitet. Dadurch werden Restkohlenwasserstoffe, die von der "heat-Up-Beschichtung" allein nicht umgesetzt werden konnten oder vorzeitig desorbiert wurden, oxidativ umgesetzt. Dies führt zu einer sehr deutlichen Verringerung des HC-Schlupfes durch den erfindungsgemäßen Katalysator und somit zu einer hervorragenden "heat-up-Performance".

Anhand der beiden erfindungsgemäßen Katalysatoren K2 und K3 wird der Einfluß der Zeolith-Zugabe in der nicht mit dem abströmenden Abgas in unmittelbarem Kontakt stehenden Beschichtung verdeutlicht.

**Beispiel 2:**

Entsprechend dem unter Beispiel 1 beschriebenen Vorgehen wurde ein erfindungsgemäßer Katalysator K2 mit zwei übereinander liegenden Schichten der folgenden Zusammensetzung hergestellt:
1. Schicht = untere Schicht = nicht mit dem abströmenden Abgas in unmittelbarem Kontakt stehende Beschichtung:

| | |
|---|---|
| 92 g/L | Silizium-Aluminium-Mischoxid mit bis zu 20 Gew.-% $SiO_2$ |
| 0,302 g/L | Platin ex Nitratlösung |
| 0,302 g/L | Palladium ex Nitratlösung |

2. Schicht = obere Schicht = mit dem abströmenden Abgas in unmittelbarem Kontakt stehende Beschichtung:

| | |
|---|---|
| 45 g/L | Silizium-Aluminium-Mischoxid mit bis zu 20 Gew.-% $SiO_2$ |
| 0,706 g/L | Platin ex Nitratlösung |
| 0,101 g/L | Palladium ex Nitratlösung |

**Beispiel 3:**

Entsprechend dem unter Beispiel 1 beschriebenen Vorgehen wurde ein erfindungsgemäßer Katalysator K2 mit zwei übereinander liegenden Schichten der folgenden Zusammensetzung hergestellt:
1. Schicht = untere Schicht = nicht mit dem abströmenden Abgas in unmittelbarem Kontakt stehende Beschichtung:

| | |
|---|---|
| 40 g/L | Silizium-Aluminium-Mischoxid mit bis zu 20 Gew.-% $SiO_2$ |
| 0,303 g/L | Platin ex Nitratlösung |
| 0,303 g/L | Palladium ex Nitratlösung |
| 15 g/L | kommerziell erhältlicher beta-Zeolith |

2. Schicht = obere Schicht = mit dem abströmenden Abgas in unmittelbarem Kontakt stehende Beschichtung:

| | |
|---|---|
| 45 g/L | Silizium-Aluminium-Mischoxid mit bis zu 20 Gew.-% $SiO_2$ |
| 0,706 g/L | Platin ex Nitratlösung |

(fortgesetzt)

| 0,101 g/L | Palladium ex Nitratlösung |

Figur 6 zeigt, daß der Zeolith-Zusatz in der nicht mit dem abströmenden Abgas in unmittelbarem Kontakt stehenden Beschichtung keinen signifikanten Einfluß auf die $NO_2$-Ausbeute des Katalysators hat.

Figur 7 zeigt, daß sich ein solcher Zeolith-Zusatz jedoch deutlich vermindernd auf den HC-Schlupf durch den Katalysator und somit sehr positiv auf die "heat-up-Performance" des Katalysators auswirkt.

Desweiteren wurde untersucht, welchen grundsätzlichen Einfluß die räumliche Anordnung der Funktionsschichten auf die Leistung des Katalysators hat. Hierzu wurden zwei weitere Vergleichskatalysatoren hergestellt:

**Vergleichsbeispiel 4:**

Entsprechend dem unter Beispiel 1 beschriebenen Vorgehen wurde ein doppelschichtiger Vergleichskatalysator VK4 der folgenden Zusammensetzung, bezogen auf das Volumen des fertigen Katalysators, hergestellt:

1. Schicht = untere Schicht = <u>nicht</u> mit dem abströmenden Abgas in unmittelbarem Kontakt stehende Beschichtung:

| 40 g/L | Silizium-Aluminium-Mischoxid mit bis zu 20 Gew.-% $SiO_2$ |
| 0,681 g/L | Platin ex Nitratlösung |
| 0,068 g/L | Palladium ex Nitratlösung |

2. Schicht = obere Schicht = mit dem abströmenden Abgas in unmittelbarem Kontakt stehende Beschichtung:

| 40 g/L | Silizium-Aluminium-Mischoxid mit bis zu 20 Gew.-% $SiO_2$ |
| 0,204 g/L | Palladium ex Nitratlösung |
| 15 g/L | kommerziell erhältlicher beta-Zeolith |

**Vergleichsbeispiel 5:**

Entsprechend dem unter Beispiel 1 beschriebenen Vorgehen wurde ein doppelschichtiger Vergleichskatalysator VK5 der folgenden Zusammensetzung, bezogen auf das Volumen des fertigen Katalysators, hergestellt:

1. Schicht = untere Schicht = <u>nicht</u> mit dem abströmenden Abgas in unmittelbarem Kontakt stehende Beschichtung:

| 40 g/L | Silizium-Aluminium-Mischoxid mit bis zu 20 Gew.-% $SiO_2$ |
| 0,204 g/L | Palladium ex Nitratlösung |
| 15 g/L | kommerziell erhältlicher beta-Zeolith |

2. Schicht = obere Schicht = mit dem abströmenden Abgas in unmittelbarem Kontakt stehende Beschichtung:

| 40 g/L | Silizium-Aluminium-Mischoxid mit bis zu 20 Gew.-% $SiO_2$ |
| 0,681 g/L | Platin ex Nitratlösung |
| 0,068 g/L | Palladium ex Nitratlösung |

Figur 8 zeigt die $NO_2$-Ausbeute über den Katalysatoren VK4 und VK5. Es ist deutlich zu sehen, daß sich die Anordnung der Zeolith-freien und über eine höhere Oxidationskraft verfügenden Beschichtung als <u>nicht</u> mit dem abströmenden Abgas in Kontakt stehende Beschichtung deutlich nachteilig auf die NO-Oxidationsleistung des Katalysators auswirkt.

**Patentansprüche**

**1.** Katalysator zur Reinigung der Abgase von Dieselmotoren bestehend aus einem Tragkörper (3) und zwei in ihrer Zusammensetzung unterschiedlichen katalytisch aktiven Beschichtungen, von denen nur eine (1) mit dem abströmenden Abgas in unmittelbarem Kontakt steht, wobei beide Beschichtungen auf einem keramischen oder metallischen Durchflußwabenkörper als Tragkörper (3) aufgebracht sind und die Platingruppenmetalle Platin (Pt) und Palladium (Pd) als katalytisch aktive Komponenten enthalten und wobei die mit dem abströmenden Abgas in unmittelbarem Kontakt stehende Beschichtung (1) mehr Pt als Pd enthält, **dadurch gekennzeichnet, dass** die mit dem abströmenden Abgas in unmittelbarem Kontakt stehende Beschichtung (1) insgesamt mehr Platingruppenmetall enthält als die nicht mit dem abströmenden Abgas in unmittelbarem Kontakt stehende Beschichtung (2) und wobei die katalytisch aktive Beschichtung (2), die nicht mit dem abströmenden Abgas in unmittelbarem Kontakt steht, direkt auf den Durchflußwabenkörper (3) aufgebracht ist, wobei sie sich über die gesamte Länge des Bauteils erstreckt und von der mit dem abströmenden Abgas in unmittelbarem Kontakt stehenden Beschichtung (1) über die gesamte Länge des Bauteils abgasseitig überdeckt wird.

2. Katalysator nach Anspruch 1, **dadurch gekennzeichnet, dass** die mit dem abströmenden Abgas in unmittelbarem Kontakt stehende Beschichtung (1) 1,2 bis 2 mal soviel Platingruppenmetall enthält wie die nicht mit dem abströmendem Abgas in unmittelbarem Kontakt stehende Beschichtung (2).

3. Katalysator nach Anspruch 2, **dadurch gekennzeichnet**, das die mit dem abströmenden Abgas in unmittelbarem Kontakt stehende Beschichtung (1) ein Pt:Pd-Gewichtsverhältnis aufweist, das größer oder gleich 6:1 ist.

4. Katalysator nach Anspruch 2 oder 3, **dadurch gekennzeichnet, dass** die nicht mit dem abströmenden Abgas in unmittelbarem Kontakt stehende Beschichtung (2) ein Pt: Pd-Gewichtsverhältnis von 1:4 bis 2:1 aufweist.

5. Katalysator nach einem der vorstehenden Ansprüche, **dadurch gekennzeichnet, dass** Platin und/oder Palladium in beiden Schichten auf einem oder mehreren hochschmelzenden, hochoberflächigen Trägeroxiden aufgebracht sind, welche ausgewählt sind aus der Gruppe der Aluminiumoxide, der Zirkonoxid- und /oder Titanoxid-dotierten Aluminiumoxide oder der Aluminium-Silizium-Mischoxide.

6. Katalysator nach Anspruch 1 , **dadurch gekennzeichnet, dass** die direkt auf dem Durchflußwabenkörper aufgebrachte Schicht (2) desweiteren eine oder mehrere Zeolithverbindungen enthält, die ausgewählt sind aus der Gruppe der beta-Zeolithe, der X-Zeolithe, der Y-Zeolithe, der Mordenite und ZSM-5-Zeolithe und die gegenüber den im Dieselabgas vorkommenden Kohlenwasserstoffen eine speichernde Wirkung zeigen.

7. Vorrichtung zur Reinigung der Abgase von Dieselmotoren, die einen Katalysator nach einem der Ansprüche 1 bis 6 aufweist.

8. Vorrichtung nach Anspruch 7, **dadurch gekennzeichnet, dass** der Katalysator nach einem der Ansprüche 1 bis 6 einem Dieselpartikelfilter und/oder einem Katalysator zur selektiven katalytischen Reduktion von Stickoxiden vorgeschaltet ist.

**Claims**

1. Catalyst for purification of exhaust gases from diesel engines consisting of a support body (3) and two catalytically active coatings of differing compositions, only one (1) of which is in direct contact with the escaping exhaust gas, wherein both coatings are applied to a ceramic or metallic honeycomb flow element as support body (3) and contain the platinum group metals platinum (Pt) and palladium (Pd) as catalytically active components and wherein the coating (1) in direct contact with the escaping exhaust gas contains more Pt than Pd, **characterized in that** the coating (1) in direct contact with the escaping exhaust gas contains in total more platinum group metal than the coating (2) that is not in direct contact with the escaping exhaust gas, and wherein the catalytically active coating (2) that is not in direct contact with the escaping exhaust gas is applied directly to the honeycomb flow element (3), wherein it extends over the total length of the component and is covered on the exhaust gas side by the coating (1) that is in direct contact with the escaping exhaust gas over the total length of the component.

2. Catalyst according to claim 1, **characterized in that** the coating (1) in direct contact with the escaping exhaust gas contains from 1.2 to 2 times as much platinum group metal as the coating (2) that is not in direct contact with the escaping exhaust gas.

3. Catalyst according to claim 2, **characterized in that** the coating (1) in direct contact with the escaping exhaust gas has a Pt:Pd weight ratio that is greater than or equal to 6:1.

4. Catalyst according to claim 2 or 3, **characterized in that** the coating (2) that is not in direct contact with the escaping exhaust gas has a Pt:Pd weight ratio of from 1:4 to 2:1.

5. Catalyst according to one of the preceding claims, **characterized in that** platinum and/or palladium in both layers is applied to one or more high-melting-point, high-surface-area carrier oxides selected from the group of aluminum oxides, zirconium oxide- and/or titanium oxide-doped aluminum oxides, or aluminum-silicon mixed oxides.

6. Catalyst according to claim 1, **characterized in that** the layer (2) applied directly to the honeycomb flow element further contains one or more zeolite compounds which are selected from the group of beta zeolites, X zeolites, Y zeolites, mordenites, and ZSM-5 zeolites and have a retentive effect upon the hydrocarbons present in the diesel exhaust gas.

7. Device for purification of exhaust gases from diesel engines, which contains a catalyst according to one of claims 1 through 6.

8. Device according to claim 7, **characterized in that** the catalyst according to one of claims 1 through 6 is arranged upstream of a diesel particle filter and/or a catalyst for selective catalytic reduction of nitrogen oxides.

## Revendications

1. Catalyseur pour l'épuration des gaz d'échappement de moteurs diesel, composé d'un corps de support (3) et de deux revêtements catalytiquement actifs ayant une composition différente, dont seulement un (1) est en contact direct avec le gaz d'échappement évacué, les deux revêtements étant appliqués sur un corps en nid d'abeille à écoulement, métallique ou céramique, en guise de corps de support (3) et contenant les métaux du groupe du platine, platine (Pt) et palladium (Pd) en guise de composants catalytiquement actifs, et le revêtement (1) en contact direct avec le gaz d'échappement évacué contenant plus de Pt que de Pd, **caractérisé en ce que** le revêtement (1) en contact direct avec le gaz d'échappement évacué contient au total plus de métal du groupe du platine que le revêtement (2) qui n'est pas en contact direct avec le gaz d'échappement évacué, le revêtement (2) catalytiquement actif, qui n'est pas en contact direct avec le gaz d'échappement évacué, étant appliqué directement sur le corps en nid d'abeille (3) à écoulement, s'étendant sur toute la longueur de l'élément et étant recouvert par le revêtement (1) en contact direct avec le gaz d'échappement évacué sur toute la longueur de l'élément du côté du gaz d'échappement.

2. Catalyseur selon la revendication 1, **caractérisé en ce que** le revêtement (1) en contact direct avec le gaz d'échappement évacué contient 1,2 à 2 fois plus de métal du groupe du platine que le revêtement (2) qui n'est pas en contact direct avec le gaz d'échappement évacué.

3. Catalyseur selon la revendication 2, **caractérisé en ce que** le revêtement (1) en contact direct avec le gaz d'échappement évacué présente un rapport pondéral Pt:Pd qui est supérieur ou égal à 6:1.

4. Catalyseur selon la revendication 2 ou 3, **caractérisé en ce que** le revêtement (2) qui n'est pas en contact direct avec le gaz d'échappement évacué présente un rapport pondéral Pt:Pd de 1:4 à 2:1.

5. Catalyseur selon l'une quelconque des revendications précédentes, **caractérisé en ce que** le platine et/ou le palladium sont appliqués dans les deux couches sur un ou plusieurs oxydes porteurs à grande surface et à point de fusion élevé, qui sont choisis dans le groupe constitué par les oxydes d'aluminium, les oxydes d'aluminium dopés à l'oxyde de titane et/ou à l'oxyde de zirconium ou les oxydes mixtes d'aluminium-silicium.

6. Catalyseur selon la revendication 1, **caractérisé en ce que** la couche (2) appliquée directement sur le corps en nid d'abeille à écoulement contient en outre un ou plusieurs composés de zéolithe, qui sont choisis dans le groupe constitué par la zéolithe bêta, la zéolithe X, la zéolithe Y, la mordénite et la zéolithe ZSM-5 et qui présentent un effet d'accumulation par rapport aux hydrocarbures présents dans le gaz d'échappement de moteur diesel.

7. Dispositif d'épuration des gaz d'échappement de moteurs diesel, présentant un catalyseur selon l'une quelconque des revendications 1 à 6.

8. Dispositif selon la revendication 7, **caractérisé en ce que** le catalyseur selon l'une quelconque des revendications 1 à 6 est disposé en amont d'un filtre à particules diesel et/ou d'un catalyseur pour la réduction catalytique sélective des oxydes d'azote.

L

1a)

(3) mit (1) und (2)

1b)

(3)

(2)

(1)

(1)

(2)

(3)

1c)

(3)

(2)      (1)

(2)      (1)

(3)

0,05 L − 0,5 L      0,5 L − 0,95 L

**Figur 1**

**Figur 2**

**Figur 3**

**Figur 4**

**Figur 5**

**Figur 6**

**Figur 7**

**Figur 8**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1054722 B
- US 6928806 B
- EP 0800856 B
- EP 1370357 B
- US 200800450405 A